# EUROPÄISCHE PATENTSCHRIFT

(11) **EP 3 764 861 B1**
(45) Veröffentlichungstag und Bekanntmachung des Hinweises auf die Patenterteilung: **14.08.2024**
(21) Anmeldenummer: 19708049.2
(22) Anmeldetag: 25.02.2019
(51) Int. Cl.: A47L 9/14, A47L 9/20, B01D 46/00, B24B 55/06, A47L 9/12

(54) **SAUGGERÄT**
SUCTION DEVICE
ASPIRATEUR

(30) Priorität: 16.03.2018 DE 102018106166
(43) Veröffentlichungstag der Anmeldung: 20.01.2021
(73) Patentinhaber: Alfred Kärcher SE & Co. KG, 71364 Winnenden (DE)
(72) Erfinder: KÜHN, Heiner, 71397 Leutenbach (DE); FRANK, Jürgen, 71737 Kirchberg (DE); ENGELHARDT, Rainer, 71397 Leutenbach (DE); FUCHS, Frank, 71277 Rutesheim (DE); LANGEN, Thorsten, 70190 Stuttgart (DE); DE MARCO, Marcel, 71737 Kirchberg a.d. Murr (DE)
(74) Vertreter: Hoeger, Stellrecht & Partner Patentanwälte mbB
(86) Internationale Anmeldenummer: PCT/EP2019/054527
(87) Internationale Veröffentlichungsnummer: WO 2019/174894

(56) Entgegenhaltungen:
- WO-A1-95/34238
- DE-A1- 1 611 072

## Beschreibung

Die Erfindung betrifft ein Sauggerät zum Absaugen von Holzstaub, umfassend eine Sauggebläseeinrichtung zur Erzeugung eines Saugstroms, eine Filtereinrichtung, welche mit dem Saugstrom durchströmbar ist, wobei die Filtereinrichtung mindestens eine Filtertasche umfasst, welche hängend gehalten ist.

Die DE 1 611 027 offenbart ein Verfahren zur Reinigung von Schlauchfiltern, bei dem die Form des Filterschlauchs im Betrieb durch den Filterdruck und eine diesem entgegenwirkende Federkraft bestimmt und beim Nachlassen und Aufheben des Filterdrucks durch die Federkraft derart geändert wird, dass sich der auf dem Filterschlauch angesetzte feste Rückstand von diesem löst.

Die DE 20 2017 107 054 U1 offenbart eine Saugvorrichtung, umfassend einen Filterhalter, einen Filtersack, welcher an dem Filterhalter gehalten ist, ein Reinigungswerkzeug, welches in den Filtersack eingetaucht ist und welches relativ zu dem Filterhalter drehbar ist, und eine Betätigungseinrichtung zur Betätigung einer Drehbewegung des Reinigungswerkzeugs, wobei durch das Reinigungswerkzeug der Filtersack einer Verdrehung unterwerfbar ist.

Die DE 25 00 875 A1 offenbart eine Stützkörperfunktion für Filterkörper.

Die DE 10 2008 047 235 A1 offenbart einen Staubsauger.

Die DE 10 2015 214 036 A1 offenbart eine Vorrichtung zur Steuerung einer Reinigung einer Filtereinheit für Staubsauger.

Aus der WO 2012/107103 A1 ist ein Verfahren zum Abreinigen mindestens eines Filters eines Staubsaugers bekannt, wobei der Staubsauger einen Sauganlass und einen Schmutzsammelbehälter aufweist, der über das mindestens eine Filter und eine Absaugleitung mit einem Saugaggregat in Strömungsverbindung steht und vom Sauggerät mit Unterdruck beaufschlagbar ist, und wobei das mindestens eine Filter zur Abreinigung reinseitig über mindestens ein Fremdluftventil mit Fremdluft beaufschlagbar ist, das sich zur Abreinigung des mindestens einen Filters aus einer geschlossenen Ventilstellung in eine geöffnete Ventilstellung wieder zurück in die geschlossene Ventilstellung bewegt.

Aus der WO 2012/107595 A1 ist ein Staubsauger bekannt, welcher eine Filtereinrichtung und eine Fremdluftventileinrichtung aufweist, wobei die Filtereinrichtung reinseitig über die Fremdluftventileinrichtung mit Fremdluft beaufschlagbar ist und die Fremdluftventileinrichtung zur Abreinigung der Filtereinrichtung aus einer geschlossenen Ventilstellung in eine geöffnete Ventilstellung und wieder zurück aus der geöffneten Ventilstellung in eine geschlossene Ventilstellung bringbar ist.

Aus der WO 95/34238 ist ein Staubsauger bekannt, welcher Taschenfilter aufweist.

Aus der DE 295 80 269 U1 ist ein Staubsauger bekannt, welcher einen Staub-Sammelbehälter aufweist, der unter einer Reihe Beutelfilter angeordnet ist, die auf einer Teilungsplatte in einer Saugkammer des Staubsaugers gelagert sind. Die Beutelfilter umfassen Filterbeutel, die auf perforierten, vorzugsweise schraubenartig gewundenen Dehnelementen gelagert sind.

Aus der US 4,329,161 ist ein Staubsauger bekannt, welcher ein Ventilsystem zum Erzeugen oder Induzieren von Luftpulsen durch ein Filterelement aufweist, um angesammelten Schmutz von dem Filterelement abzuschütteln.

Der Erfindung liegt die Aufgabe zugrunde, ein Sauggerät der eingangs genannten Art bereitzustellen, welches einen unterbrechungsfreien Saugbetrieb insbesondere auch beim Absaugen von Holzstäuben ermöglicht.

Diese Aufgabe wird bei dem eingangs genannten Sauggerät erfindungsgemäß gelöst durch eine automatische Filterabreinigungseinrichtung, welche mindestens einen der folgenden Betriebsmodi aufweist: eine automatische Abreinigung bei Ausschalten des Sauggeräts, eine automatische Abreinigung bei Einschalten des Sauggeräts, eine bedarfsgerechte Abreinigung.

Durch eine automatische Filterabreinigungseinrichtung lässt sich ein unterbrechungsfreier Saugbetrieb des Sauggeräts realisieren. Ein Bediener muss nicht manuell eingreifen, um eine zugesetzte Filtereinrichtung abzureinigen; die automatische Filterabreinigungseinrichtung sorgt über einen automatisierten Vorgang für die Filterabreinigung.

Es hat sich gezeigt, dass insbesondere beim Absaugen von Holzstäuben eine Filtereinrichtung mit mindestens einer Filtertasche sehr gute Ergebnisse liefert, beispielsweise im Vergleich zu einem Flachfaltenfilter.

Durch die Kombination einer automatischen Filterabreinigungseinrichtung mit der entsprechenden Filtereinrichtung lässt sich auch für das Absaugen von Holzstäuben ein effektiver, unterbrechungsfreier Saugbetrieb realisieren. Es lässt sich auf effektive Weise eine Zusetzung der Filtereinrichtung mit Holzstaub verhindern, indem zum einen die Filtereinrichtung mindestens eine Filtertasche umfasst, und zum anderen eine automatische Filterabreinigung vorgesehen ist.

Insbesondere ist die mindestens eine Filtertasche mit einer Schmutzseite in einem Aufnahmeraum positioniert, welcher Teil eines Sauggutaufnahmeraums ist oder direkt fluidwirksam mit dem Sauggutaufnahmeraum verbunden ist. Es lässt sich dadurch eine effektive Filterung insbesondere für Holzstäube erreichen.

Günstig ist es, wenn die mindestens eine Filtertasche mindestens einen Kanal aufweist, welcher fluidwirksam mit der Sauggebläseeinrichtung verbunden ist. Es lässt sich dadurch eine effektive Filterung erreichen und insbesondere lässt sich auf effektive Weise eine Holzstaubabsaugung durchführen. Ferner lässt sich auf einfache Weise beispielsweise durch Fremdluftpulse eine effektive Abreinigung erzielen; die Fremdluftpulse können in den mindestens einen Kanal eingekoppelt werden und beispielsweise zu einer Aufblähung der mindestens einen Filtertasche mit entsprechender Abschüttlung von anhaftenden Schmutzpartikeln führen.

Günstig ist es, wenn der mindestens eine Kanal durch einen Innenraum der mindestens einen Filtertasche gebildet ist. Es ergibt sich so eine einfache Ausbildung. Es lässt sich auf einfache Weise eine effektive Absaugung von Holzstäuben durchführen; es lässt sich auf einfache Weise ein unterbrechungsfreier Saugbetrieb realisieren.

Insbesondere ist der mindestens eine Kanal bei einem Saugbetrieb des Sauggeräts formstabil. Dies kann durch entsprechende Ausbildung und insbesondere Materialwahl der Filtertasche erreicht werden. Alternativ kann beispielsweise durch eine Streckeinrichtung eine Filtertasche aus einem nicht formstabilen Material wie einem textilen Material derart gestreckt werden, dass die Kombination aus Streckeinrichtung und Filtertasche formstabil ist. Bei einem formstabilen mindestens einen Kanal ist beispielsweise die Filtertasche in Art eines Reagenzglases hängend gehalten.

Bei einer Ausführungsform weist der mindestens eine Kanal eine Längserstreckungsrichtung auf, welche mindestens näherungsweise parallel zu einer Hauptströmungsrichtung eines Saugstroms bei einer Zuströmung zu der Filtereinrichtung ist, und/oder quer zu einer Öffnung eines Filterhalters orientiert ist, in welche die Filtereinrichtung eingesetzt ist, und/oder quer zu einem Halteraum der Filtereinrichtung orientiert ist, und/oder mindestens näherungsweise parallel zu einer Drehachse der Sauggebläseeinrichtung orientiert ist, und/oder mindestens näherungsweise parallel zu einer Kraftrichtung einer Streckeinrichtung für die mindestens eine Filtertasche orientiert ist. Es ergibt sich so eine effektive Filterung bei einfacher Abreinigung mittels der Filterabreinigungseinrichtung. Insbesondere entspricht die Längserstreckungsrichtung einer Hauptströmungsrichtung eines Saugstroms in dem Kanal.

Es ist ferner günstig, wenn der mindestens eine Kanal durch eine Reinseite der mindestens einen Filtertasche begrenzt ist. Der Kanal kann dann entsprechend zur Abführung eines Saugstroms und Einkopplung in einen Kanal, welcher direkt fluidwirksam mit der Sauggebläseeinrichtung verbunden ist, verwendet werden. Ferner können über den Kanal beispielsweise Fremdluftpulse eingekoppelt werden, um eine Abreinigung der mindestens einen Filtertasche zu ermöglichen.

Günstig ist es, wenn der mindestens einen Filtertasche eine Streckeinrichtung für die Filtertasche zugeordnet ist. Dadurch ist es möglich, die Filtertasche selber aus einem nicht formstabilen Material wie einem textilen Material auszugestalten und entsprechend die gewünschte Filterwirkung für Partikel bis zu einer Mindestgröße einzustellen. Die Streckeinrichtung sorgt dann für eine Formstabilität der Kombination aus Filtertasche und Streckeinrichtung. Dadurch wiederum lässt sich auf einfache Weise eine Formstabilität bei einem Saugbetrieb erreichen. Weiterhin kann über die Streckeinrichtung auch eine effektive automatische Filterabreinigung durchgeführt werden, indem insbesondere über Fremdluftpulse, welche in die mindestens eine Filtertasche eingekoppelt werden, die Filtertasche aufgebläht wird.

Bei einer konstruktiv einfachen Ausführungsform umfasst die Streckeinrichtung eine Federeinrichtung oder ist eine solche und umfasst insbesondere mindestens eine Spiralfeder. Durch die Federeinrichtung lässt sich eine Streckkraft auf die mindestens eine Filtertasche ausüben, um dieser eine bestimmte Formstabilität zu geben.

Günstig ist es, wenn die mindestens eine Filtertasche an einem Stutzen angeordnet ist und insbesondere auf den Stutzen aufgestülpt ist. Es lässt sich so auf einfache Weise eine Filtertasche in eine Filtereinrichtung integrieren. Es lassen sich insbesondere eine Mehrzahl von Filtertaschen in die Filtereinrichtung integrieren. Ferner lässt sich so auf einfache Weise mindestens ein Kanal für die jeweilige Filtertasche bereitstellen. Es lässt sich dadurch insbesondere eine Filtereinrichtung realisieren, welche eine Mehrzahl von Filtertaschen aufweist, die kerzenartig bzw. in der Art von Reagenzgläsern hängend angeordnet sind.

Bei einer konstruktiv einfachen Ausführungsform stützt sich eine Streckeinrichtung und insbesondere eine Feder an dem Stutzen ab. Es ist dadurch auf einfache Weise möglich, dass eine Feder sich einseitig an dem Stutzen abstützt und andererseits sich beispielsweise an einer Innenseite der mindestens einen Filtertasche abstützt. Es lässt sich so auf einfache Weise eine ausreichende Formstabilität für eine Filtertasche realisieren.

Günstig ist es, wenn der Stutzen mindestens eine Öffnung aufweist. Über diese mindestens eine Öffnung lässt sich ein Kanal durch den Stutzen hindurch bereitstellen, sodass ein Saugstrom führbar ist und ferner ein Fremdluftstrom durch die Öffnung hindurch in die mindestens eine Filtertasche einkoppelbar ist.

Es ist dann günstig, wenn die mindestens eine Öffnung in fluidwirksamer Verbindung mit einem Innenraum der mindestens einen Filtertasche steht, und in fluidwirksamer Verbindung mit der Sauggebläseeinrichtung steht. Die mindestens eine Öffnung stellt dadurch gewissermaßen den Anschluss der mindestens einen Filtertasche zu der Sauggebläseeinrichtung bereit.

Es ist ferner günstig, wenn die mindestens eine Öffnung in fluidwirksamer Verbindung mit einem Fremdluftpfad der Filterabreingungseinrichtung steht. Die mindestens eine Öffnung stellt dann auch den Anschluss zu der automatischen Filterabreinigungseinrichtung bereit.

Günstigerweise ist eine Außenseite der mindestens einen Filtertasche eine Schmutzseite, und eine Innenseite der mindestens einen Filtertasche ist eine Reinseite. Dadurch lässt sich die mindestens eine Filtertasche hängend anordnen und es ergibt sich eine effektive Filterwirkung insbesondere auch bezüglich Holzstäuben. Ferner lässt sich eine effektive Filterabreinigung durchführen.

Bei einer Ausführungsform ist die mindestens eine Filtertasche als Filterkerze ausgebildet, wobei die mindestens eine Filtertasche in der Art eine Kerze hängend angeordnet ist. Die mindestens eine Filtertasche weist entweder selber oder insbesondere in Verbindung mit einer Streckeinrichtung eine ausreichende Formstabilität auf.

Bei einer Ausführungsform weist die Filtereinrichtung eine Stutzenanordnung mit einer Mehrzahl von Stutzen mit mindestens einer Öffnung auf. Es lassen sich so auf einfache Weise eine Mehrzahl von Filtertaschen in die Filtereinrichtung integrieren.

Es ist dabei günstig, wenn die Stutzenanordnung zusammenhängend ausgebildet ist. Dadurch lässt sich die Filtereinrichtung mit der Mehrzahl von Filtertaschen als Einheit handhaben.

Es ist dann ferner vorteilhaft, wenn die Filtereinrichtung eine Filtertaschenanordnung mit einer Mehrzahl von Filtertaschen aufweist, wobei eine jeweilige Filtertasche an einem zugeordneten Stutzen positioniert ist. Es lässt sich so eine effektive Absaugung von Holzstäuben mit effektiver Abreinigungsfunktion realisieren.

Es ist dabei möglich, dass die Filtertaschenanordnung zusammenhängend ist oder dass einzelne Filtertaschen an jeweiligen Stutzen hängend positioniert sind.

Bei einer Ausführungsform weist die Filtereinrichtung eine Mehrzahl von beabstandeten Filtertaschen auf, welche insbesondere in Reihen und/oder Spalten angeordnet sind. Es lässt sich so ein relativ hoher Volumenstrom für den Saugstrom erreichen mit entsprechender Filterwirkung.

Bei einer Ausführungsform ist die Filtereinrichtung austauschbar an einem Filterhalter positioniert und es sind insbesondere unterschiedliche Arten von Filtereinrichtungen an dem Filterhalter positioniert. Entsprechend ist beispielsweise eine Dichtungsanordnung des Filterhalters bzw. der Filtereinrichtung ausgebildet, um unterschiedliche Arten von Filtereinrichtungen verwenden zu können.

Günstig ist es, wenn das Sauggerät einen Saugkopf aufweist, an welchem die Sauggebläseeinrichtung angeordnet ist, und einen Sauggutbehälter aufweist.

Es ergibt sich so ein konstruktiv einfacher Aufbau mit einfachem Zugang zu dem Sauggutbehälter, um diesen leeren zu können.

Ein Filterhalter für die Filtereinrichtung kann dabei an dem Saugkopf oder an dem Sauggutbehälter angeordnet sein.

Bei einer Ausführungsform ist die automatische Filterabreinigungseinrichtung als Fremdluftventileinrichtung ausgebildet, bei welcher die Filtereinrichtung über mindestens ein Fremdluftventil mit Fremdluft beaufschlagbar ist. Es wird in diesem Zusammenhang auf die WO 2012/107103 A1 verwiesen, auf die ausdrücklich Bezug genommen wird. Insbesondere lässt sich das Fremdluftventil zur Abreinigung der Filtereinrichtung aus einer geschlossenen Ventilstellung in eine geöffnete Ventilstellung und wieder zurück in die geschlossene Ventilstellung bewegen. Es lassen sich vorteilhafterweise über die Fremdluftventileinrichtung stoßartige Fremdluftimpulse generieren, um die Filtereinrichtung zu beaufschlagen.

Insbesondere ist die Filterabreinigungseinrichtung so angeordnet und ausgebildet, dass über Fremdluft die mindestens eine Filtertasche aufblähbar ist und insbesondere schlagartig (stoßartig bzw. impulsartig) aufblähbar ist. Es lässt sich so effektiv Schmutz, welcher an einer entsprechenden Filtertasche anhaftet, abschütteln, um so wiederum eine effektive Abreinigungswirkung für die Filtereinrichtung zu erzielen.

Die automatische Filterabreinigungseinrichtung umfasst mindestens einen der folgenden Betriebsmodi: eine automatische Abreinigung bei Ausschalten des Sauggeräts, eine automatische Abreinigung bei Einschalten des Sauggeräts, eine bedarfsgerechte Abreinigung. Beispielsweise wird bei Ausschalten des Sauggeräts ein entsprechender Magnet der automatischen Filterabreinigungseinrichtung stromlos gemacht, was in einem Abreinigungsprozess resultiert. Bei Einschalten des Sauggeräts (Inbetriebnahme des Sauggeräts) kann eine Steuereinrichtung des Sauggeräts entsprechende Steuersignale bereitstellen, um eine automatische Abreinigung zu bewirken. Es ist auch möglich, dass eine bedarfsgerechte Abreinigung durchgeführt wird, wobei an der Filtereinrichtung direkt oder indirekt ihr Zusetzungsgrad geprüft wird und, wenn eine bestimmte Schwelle überschritten wird, eine Steuereinrichtung entsprechende Steuersignale an die automatische Filterabreinigungseinrichtung liefert, die zu einem Abreinigungsvorgang führen. Es lässt sich so mit dem Sauggerät ein unterbrechungsfreier Saugbetrieb durchführen, bei dem ein Benutzer nicht manuell eingreifen muss, um eine Filterabreinigung durchzuführen.

Bei einer Ausführungsform ist das Sauggerät als Stand-alone-Staubsauger ausgebildet, wobei dieser Staubsauger insbesondere transportabel ist. Es ist grundsätzlich auch möglich, dass das Sauggerät beispielsweise in eine Absauganlage oder auch in eine Kehrmaschine oder dergleichen integriert ist.

Das erfindungsgemäße Sauggerät lässt sich vorteilhafterweise dazu verwenden, Holzstäube abzusaugen. Es lässt sich so ein unterbrechungsfreier Saugbetrieb mit effektiver Absaugwirkung realisieren.

Die nachfolgende Beschreibung bevorzugter Ausführungsformen dient im Zusammenhang mit den Zeichnungen der näheren Erläuterung der Erfindung. Es zeigen:
- Figur 1: eine Teilschnittdarstellung eines Ausführungsbeispiels eines Sauggeräts;
- Figur 2: eine perspektivische Darstellung eines Ausführungsbeispiels einer Filtereinrichtung;
- Figur 3: eine seitliche Draufsicht auf die Filtereinrichtung gemäß Figur 2;
- Figur 4: eine Schnittansicht längs der Linie 4-4 gemäß Figur 3; und
- Figuren 5(a) bis (d): unterschiedliche Formen von Filtertaschen.

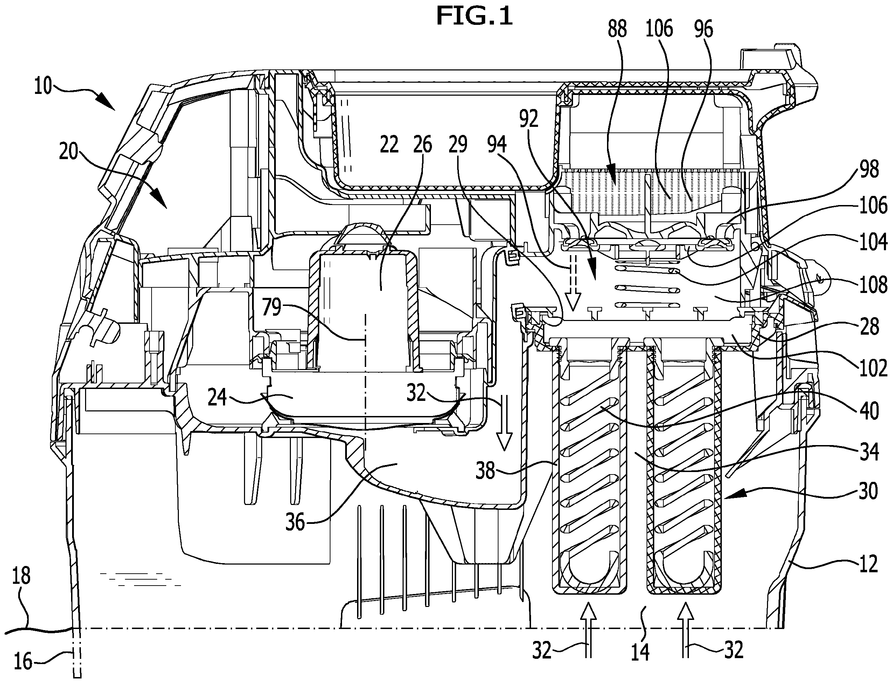

Ein Ausführungsbeispiel eines erfindungsgemäßen Sauggeräts, welches in einer Teildarstellung in Figur 1 mit 10 bezeichnet ist, ist ein Staubsauger, welcher insbesondere als Stand-alone-Gerät ausgebildet ist. Das Sauggerät 10 umfasst einen Sauggutbehälter 12 mit einem Sauggutaufnahmeraum 14.

An dem Sauggutbehälter 12 ist ein Anschluss 16 für einen Saugschlauch 18 angeordnet.

An dem Sauggutbehälter 12 sitzt ein Saugkopf 20. Der Saugkopf 20 ist lösbar an dem Sauggutbehälter 12 fixiert. Wenn der Saugkopf 20 an dem Sauggutbehälter 12 positioniert ist, dann deckt er den Sauggutaufnahmeraum 14 nach oben ab.

Der Sauggutbehälter 12 ist auf einer Unterlage aufstellbar. Er weist dazu beispielsweise eine Radeinrichtung bzw. Rolleneinrichtung auf, über welche der Sauggutbehälter 12 und damit das Sauggerät 10 als Ganzes fahrbar auf der Unterlage abstellbar ist.

In dem Saugkopf 20 ist eine Sauggebläseeinrichtung 22 angeordnet, welche im Betrieb des Saugeräts 10 einen Saugstrom erzeugt.

Die Sauggebläseeinrichtung 22 umfasst ein Gebläse 24 mit einem oder mehreren Laufrädern, und einen Motor und insbesondere Elektromotor 26 zum rotativen Antrieb des oder der Laufräder.

Das Sauggerät 10 weist einen Filterhalter 28 mit einer Öffnung 29 auf. Der Filterhalter 28 ist bei dem gezeigten Ausführungsbeispiel an dem Saugkopf 20 angeordnet. Es ist grundsätzlich auch möglich, dass der Filterhalter 28 an dem Sauggutbehälter 12 angeordnet ist.

Der Filterhalter 28 hält eine Filtereinrichtung 30 in der Öffnung 29. Die Filtereinrichtung 30 ist bezogen auf einen Saugstrom 32 zwischen dem Sauggutaufnahmeraum 14 und der Sauggebläseeinrichtung 22 positioniert. Der Saugstrom 32 durchströmt im Betrieb des Sauggeräts 10 die Filtereinrichtung 30, wobei die Filtereinrichtung 30 Schmutzpartikel bis zu einer bestimmten Größe ausfiltert und verhindert, dass diese zu der Sauggebläseeinrichtung 22 gelangen.

Das Sauggerät 10 weist einen Aufnahmeraum 34 auf, in welchem die Filtereinrichtung 30 positioniert ist. Dieser Aufnahmeraum 34 ist Teil des Sauggutaufnahmeraums 14 oder steht in direkter fluidwirksamer Verbindung mit dieser.

Bezogen auf den Saugstrom 32 ist der Filtereinrichtung 30 mindestens ein (Absaug-)Kanal 36 nachgeordnet, welcher zu der Sauggebläseeinrichtung 22 führt. Dieser mindestens eine Kanal 36 ist insbesondere in dem Saugkopf 20 angeordnet.

An dem Saugkopf 20 ist eine Abführeinrichtung für Prozessluft der Sauggebläseeinrichtung 22 angeordnet.

Die Filtereinrichtung 30, welche an dem Filterhalter 28 gehalten ist, umfasst mindestens eine Filtertasche 38 und insbesondere eine Mehrzahl von Filtertaschen 38, welche hängend an der Filtereinrichtung 30 gehalten sind und dabei in dem Aufnahmeraum 34 positioniert sind.

Die Filtereinrichtung 30 ist als Kerzenfilter bzw. Kanalfilter ausgebildet. Die Filtertaschen 38 können grundsätzlich eine Kerzenform haben (wie untenstehend noch näher erläutert wird) bzw. weisen einen Kanal 40 auf.

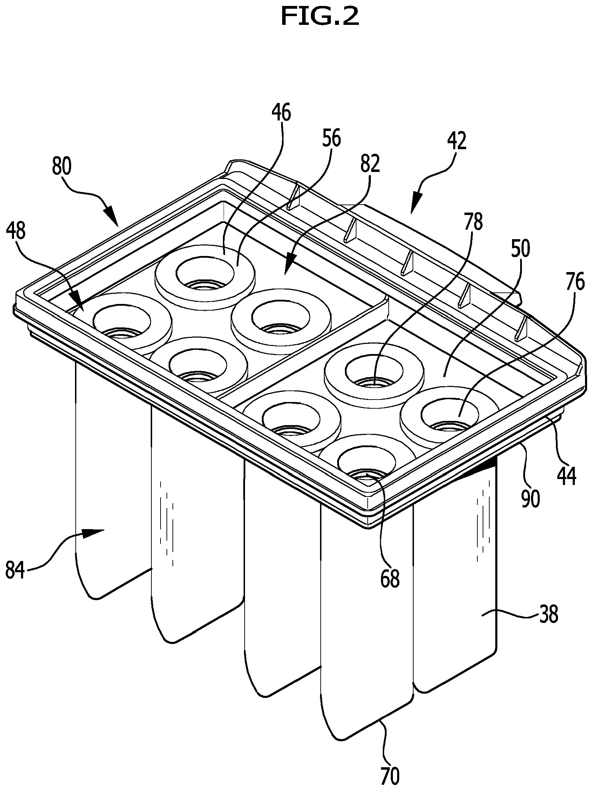

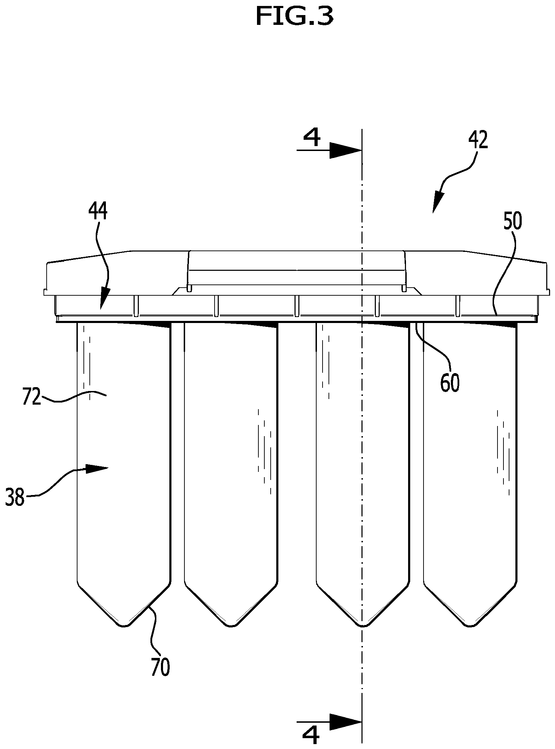

In den Figuren 2 bis 4 ist ein Ausführungsbeispiel einer entsprechenden Filtertaschen-Filtereinrichtung 42 gezeigt.

Die Filtereinrichtung 30 umfasst einen Halterahmen 44, über welchen die Filtertaschen-Filtereinrichtung 42 an dem Filterhalter 28 fixierbar ist. An dem Halterahmen 44 sind eine Mehrzahl von Stutzen 46 angeordnet, wobei die Stutzen 46 eine Stutzenanordnung 48 bilden.

Die Stutzenanordnung 48 ist zusammenhängend ausgebildet. Es ist dabei möglich, dass die einzelnen Stutzen 46 der Stutzenanordnung 48 miteinander verbunden sind bzw. mit dem Halterahmen 44 verbunden sind.

Bei einem Ausführungsbeispiel ist an dem Halterahmen 44 ein Boden 50 angeordnet. In dem Boden 50 sind Öffnungen 52 gebildet. Die Öffnungen 52 weisen insbesondere einen kreisrunden Querschnitt auf.

In eine Öffnung 52 ist jeweils ein Stutzen 46 eingesetzt.

Der Stutzen 46 weist dazu einen Rohrbereich 54 auf, an welchem ein Flansch 56 sitzt. Der Flansch 56 hat einen größeren Durchmesser als der Rohrbereich 54. Der Flansch 56 ist insbesondere durch einen Kreisring gebildet.

Eine Unterseite des Flansches 56 liegt an dem Boden 50 an. Der Rohrbereich 54 ist durch die jeweilige Öffnung 52 durchgetaucht und ragt mit einem Bereich 58 über den Boden 50 an einer Rückseite 60 hinaus.

Der Boden 50 ist fluiddicht ausgebildet und fluiddicht mit dem Halterahmen 44 verbunden. Er deckt die Öffnung 29 des Filterhalters 28 fluiddicht zu.

Eine jeweilige Filtertasche 38 ist an dem Stutzen 46 und dabei an dem Bereich 58 fixiert. Insbesondere ist die jeweilige Filtertasche 38 an einem offenen Ende 62 auf den Bereich 58 des Stutzens 46 aufgestülpt.

Wenn die Filtertaschen-Filtereinrichtung 42 in den Filterhalter 28 eingesetzt ist, sind dabei dann die jeweiligen Filtertaschen 38 hängend in dem Aufnahmeraum 34 positioniert.

Bei einem Ausführungsbeispiel ist die Filtertasche 38 selber aus einem textilen Material hergestellt.

Um eine für die Filterwirkung der Filtertaschen-Filtereinrichtung 42 erforderliche Steifigkeit zu erzielen, ist der entsprechenden Filtertasche 38 eine Streckeinrichtung 64 zugeordnet. Die Streckeinrichtung 64 dient dazu, die jeweilige Filtertasche 38 zu strecken und mit einer ausreichenden Steifigkeit zu versehen.

Bei einer Ausführungsform ist die Streckeinrichtung 64 durch eine Federeinrichtung 66 mit (mindestens) einer Spiralfeder 68 gebildet. Diese Spiralfeder 68 stützt sich an einer Innenseite eines Bodens 70 der Filtertasche 38 ab, wobei der Boden 70 dem offenen Ende 62 gegenüberliegt.

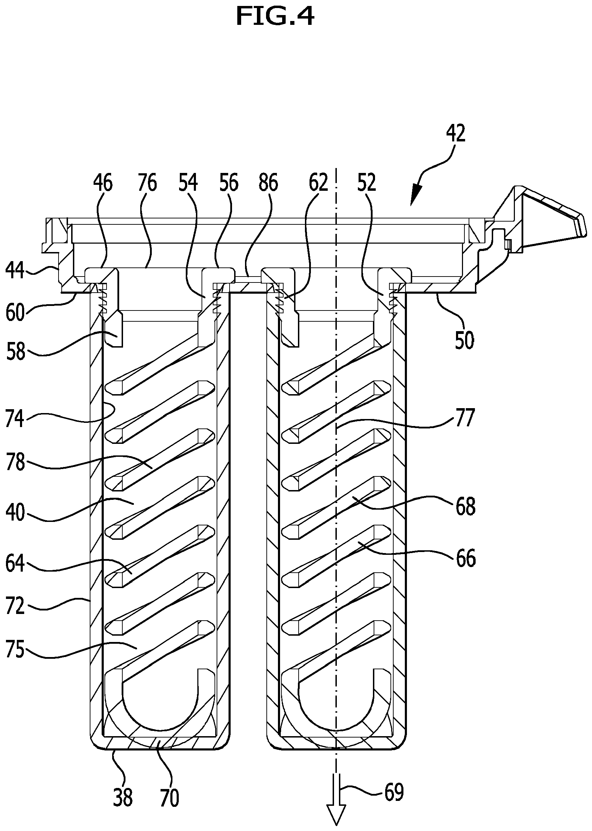

Ferner stützt sich die Spiralfeder 68 an dem Stutzen 46 und dabei an dem Bereich 58 beispielsweise stirnseitig ab. Die Spiralfeder 68 übt eine Spreizkraft (Streckkraft) in einer Kraftrichtung 69 aus (Figur 4).

Die Federeinrichtung 66 ist an die entsprechenden Abmessungen der Filtertasche 38 angepasst, sodass diese zwischen dem offenen Ende 62 und dem Boden 70 gestreckt an dem jeweiligen Stutzen 46 gehalten ist.

Die Kombination aus Filtertasche 38 mit Federeinrichtung 66, welche in einem Innenraum der Filtertasche 38 angeordnet ist, und welche sich an dem Stutzen 46 abstützt, hat eine genügende Eigensteifigkeit, um eine gute Formstabilität und Filterwirkung auch bei wirkenden Druckkräften, die durch den Saugstrom 32 erzeugt werden, zu haben. Insbesondere werden die einzelnen Filtertaschen 38 nicht so verformt, dass sie einander berühren.

Die jeweiligen Filtertaschen 38 weisen eine Außenseite 72 und eine Innenseite 74 auf. Die Außenseite 72 ist eine Schmutzseite. Sie ist direkt in dem Aufnahmeraum 34 positioniert und sie wird durch einen schmutzbeladenen Saugstrom 32 beaufschlagt.

Die Innenseite 74 begrenzt einen Innenraum 75 der Filtertasche 38. Die Innenseite 74 ist eine Reinseite. Sie steht in fluidwirksamer Verbindung mit dem mindestens einen Kanal 36 und damit der Sauggebläseeinrichtung 22. Sie ist durch den über die Filterwirkung der Filtertasche 38 gereinigten Saugstrom beaufschlagt.

Der jeweilige Stutzen 46 weist eine in den Innenraum 75 der entsprechenden Filtertasche 38, welche an dem Stutzen 46 gehalten ist, durchgehende Öffnung 76 auf. Die Öffnung 76 hat insbesondere einen kreisrunden Querschnitt.

Über die Öffnung 76 ist eine fluidwirksame Öffnung zu dem Innenraum 75 der Filtertasche 38 hergestellt.

Die Öffnung 76 bildet mit dem Innenraum 75 der entsprechenden Filtertasche 38 den Kanal 40 für die entsprechende Filtertasche 38 der Kanalfiltereinrichtung.

Die Spiralfeder 68 ist insbesondere so dimensioniert, dass sich Bereiche der Innenseite 74 an ihr abstützen können. Sie weist eine zentrale Öffnung 78 auf, um welche die entsprechenden Spiralen der Spiralfeder 68 verlaufen, um den Kanal 40 zu bilden und eine Durchströmung mit dem Luftstrom des Saugstroms 38 zu ermöglichen.

Der Innenraum 75 der jeweiligen Filtertaschen 38 ist beispielsweise (hohl-)zylindrisch oder (hohl-)konisch oder entspricht einem (Hohl-)Konusabschnitt.

Der jeweilige Kanal 40 erstreckt sich in einer Längserstreckungsrichtung 77 auf (Figur 4). Diese Längserstreckungsrichtung 77 ist mindestens näherungsweise parallel zu der Kraftrichtung 69 orientiert. Sie ist ferner quer und mindestens näherungsweise senkrecht zu der Öffnung 29 des Filterhalters 28 orientiert.

Die Sauggebläseeinrichtung 22 weist eine Drehachse 79 (Figur 1) auf, welche eine Drehachse des mindestens einen Laufrads ist. Die Längserstreckungsrichtung 77 des Kanals 40 ist mindestens näherungsweise parallel zu dieser Drehachse 79.

Von dem Sauggutaufnahmeraum 14 strömt der Saugstrom 32 in einer Hauptströmungsrichtung zu der Filtereinrichtung 30. Diese Hauptströmungsrichtung (in Figur 1 durch die Doppelpfeile angedeutet) ist derart, dass sie mindestens näherungsweise parallel zu der Längserstreckungsrichtung 77 des entsprechenden Kanals 40 ist.

Die Filtertaschen-Filtereinrichtung 42 weist eine Mehrzahl von Filtertaschen 38 auf, welche in Reihen 80 und Spalten 82 angeordnet sind.

Bei dem gezeigten Ausführungsbeispiel umfasst die Filtertaschen-Filtereinrichtung 42 eine erste Reihe und eine beabstandete zweite Reihe an Filtertaschen 38. Ferner umfasst sie vier beabstandete Spalten 82.

Insgesamt umfasst die Filtertaschen-Filtereinrichtung 42 acht Filtertaschen 38, welche beabstandet an dem Halterahmen 44 mit der Stutzeneinrichtung 48 gehalten sind.

Bei einem Ausführungsbeispiel ist es vorgesehen, dass die Filtertaschen 38 in einer Filtertaschenanordnung 84 zusammenhängend sind. Einzelne Filtertaschen 38 sind über Stege 86 miteinander verbunden.

Es ist grundsätzlich auch möglich, dass einzelne Filtertaschen 38, ohne dass sie zusammenhängend sind, an den jeweiligen Stutzen 46 an dem jeweiligen Bereich 58 aufgestülpt sind.

Die jeweiligen Filtertaschen 38 mit ihrer Streckeinrichtung 64 können grundsätzlich eine Art von Kerzenform haben. Die Filtertaschen-Filtereinrichtung 42 kann deshalb auch als Kerzenfiltereinrichtung angesehen werden.

Die jeweiligen Filtertaschen 38 mit der Streckeinrichtung 64 sind an der Filtereinrichtung 30 in der Art von Reagenzgläsern gehalten, wobei die jeweiligen Filtertaschen 38 eine flexible Wandung aufweisen und die Formstabilität über die Streckeinrichtung 64 eingebracht wird.

Der Filterhalter 28 ist insbesondere so ausgebildet, dass auch andere Filtereinrichtungen wie die Filtertaschen-Filtereinrichtung 42 einsetzbar sind. Beispielsweise lässt sich anstatt der Filtertaschen-Filtereinrichtung 42 ein Flachfaltenfilter einsetzen oder es lässt sich ein H-Filter oder eine Doppelfilterkassette oder beispielsweise auch eine Feinstaubkassette einsetzen. Insbesondere ist die Filtertaschen-Filtereinrichtung 42 mit einer Dichtung 90 (Figur 2) versehen, die angepasst ist an den Filterhalter 28, um bei eingesetzter Filtertaschen-Filtereinrichtung 42 eine entsprechende Fluiddichtigkeit zu erreichen.

Das Sauggerät umfasst eine Filterabreinigungseinrichtung 88, welche zur automatischen Abreinigung der Filtereinrichtung 30 dient. Insbesondere lässt sich beim Betrieb des Saugeräts 10 über die Filterabreinigungseinrichtung 88 die Filtereinrichtung 30 (mit der Filtertaschen-Filtereinrichtung 42) automatisch abreinigen, ohne dass ein Bediener eingreifen muss und insbesondere ein Bedienelement manuell betätigen muss. Es lässt sich dadurch ein unterbrechungsfreier Saugbetrieb erreichen.

Bei einer Ausführungsform ist die Filterabreinigungseinrichtung 88 als Fremdluftventileinrichtung 92 ausgebildet, über welche die Filtereinrichtung 30 mit Fremdluft in Gegenströmung zu dem Saugstrom 32 (in Figur 1 mit dem Bezugszeichen 94 angedeutet) beaufschlagbar ist.

Insbesondere lässt sich dann über die Filterabreinigungseinrichtung 88 automatisiert ein Fremdluftstrom 94 bereitstellen, welcher durch die Öffnungen 76 der Stutzen 46 in die jeweiligen Innenräume 75 der Filtertaschen 38 strömt und diese aufbläht.

Der entsprechende Fremdluftstrom 94 lässt sich insbesondere impulsartig bereitstellen, um dann durch das impulsartige Aufblähen eine effektive Abreinigungswirkung zu erzielen; an den jeweiligen Filtertaschen 38 anhaftende Schmutzpartikel werden gelöst und in den Sauggutaufnahmeraum 14 geschleudert.

Ein Ausführungsbeispiel einer Fremdluftventileinrichtung zur Abreinigung einer Filtereinrichtung ist in der WO 2012/107103 A1 beschrieben. Auf diese Druckschrift wird ausdrücklich und vollinhaltlich Bezug genommen.

Insbesondere ist in dem Saugkopf 20 bezogen auf den Saugstrom 32 oberhalb der Filtereinrichtung 30 ein Fremdluftventil 96 angeordnet. Das Fremdluftventil 96 umfasst eine ortsfest im Saugkopf 20 angeordnete Ventilhalterung 98. Die Ventilhalterung 98 bildet einen Ventilsitz aus für einen beweglichen Ventilkörper 100. Dieser Ventilkörper 100 hat die Form eines Ventiltellers.

Der Ventilkörper 100 ist mittels einer Schließfeder (in Figur 1 nicht gezeigt) mit einer Schließkraft in Richtung auf die Ventilhalterung 98 beaufschlagt.

Diese Schließfeder ist zwischen dem Filterhalter 28 und dem Ventilkörper 100 eingespannt.

Beispielsweise umfasst der Ventilhalter 28 ein Zwischenelement 102 (Figur 1), welches eine Mehrzahl von Strömungsdurchlässen aufweist, und welches in dem Halterahmen 44 der Filtereinrichtung 30 positioniert ist. Die Schließfeder stützt sich an diesem Zwischenelement 102 ab.

Zusätzlich zu dieser Schließfeder stützt sich an dem Filterhalter 28 (und dabei an dem Zwischenelement 102) eine Anschlagfeder 104 ab. Es ist insbesondere vorgesehen, dass die Schließfeder und die Anschlagfeder 104 jeweils eine lineare Kennlinie aufweisen. Beispielsweise sind diese Federn als Schraubenfedern ausgebildet.

Während die Schließfeder in der Schließstellung des Ventilkörpers 100 unter Vorspannung steht, steht die Anschlagfeder 104 in der Schließstellung des Ventilkörpers 108 nicht unter Vorspannung. Erst wenn sich der Ventilkörper 100 vom Ventilsitz der Ventilhalterung 98 abhebt, gelangt die Anschlagfeder 104 an einer Unterseite des Ventilkörpers 100 zur Anlage und wird bei einer weiteren Bewegung des Ventilkörpers 100 etwas zusammengedrückt. Sie übt dadurch eine zunehmende Rückstellkraft auf den Ventilkörper 100 aus und beschleunigt die Bewegung des Ventilkörpers 100 von einer geschlossenen Ventilstellung über eine geöffnete Ventilstellung wieder zurück in die geschlossene Ventilstellung.

In der geöffneten Ventilstellung nimmt der Ventilkörper 100 einen Abstand zu der Ventilhalterung 98 ein, die den Ventilsitz ausbildet.

Die Ventilhalterung 98 weist eine Mehrzahl von Durchgangsöffnungen auf (in der Zeichnung nicht gezeigt), deren Mündungsbereiche vom Ventilkörper 100 verschlossen werden, wenn dieser seine geschlossene Ventilstellung einnimmt.

In Höhe der Ventilhalterung 98 weist der Saugkopf 20 (mindestens) eine seitliche Öffnung auf. Über die seitliche Öffnung kann Fremdluft in die Durchgangsöffnungen der Ventilhalterung 98 einströmen.

Nimmt der Ventilkörper 100 seine zur Ventilhalterung 98 beabstandete offene Ventilstellung ein, so steht die seitliche Öffnung über die Durchgangsöffnung der Ventilhalterung 98 mit dem Kanal 40 in Strömungsverbindung und Fremdluft kann die Reinseiten (Innenseiten 74) der Filtertaschen 38 beaufschlagen.

Nimmt der Ventilkörper 100 seine geschlossene Ventilstellung ein, so ist die Strömungsverbindung zwischen der seitlichen Öffnung und dem Kanal 40 unterbrochen.

In einem zentralen Bereich trägt die Ventilhalterung 98 einen Elektromagneten 106. In Umfangsrichtung ist der Elektromagnet 106 von einem Ringraum umgeben, in den eine oberseitig an den Ventilkörper 100 angeformte Führungshülse eintaucht. Die Führungshülse nimmt ein magnetisierbares Element in Form einer Eisenplatte auf, die in der geschlossenen Ventilstellung des Ventilkörpers 100 an einer freien Stirnkante des Elektromagneten 106 anliegt und in Kombination mit dem Elektromagneten 106 einen geschlossenen Magnetkreis ausbildet.

Der Elektromagnet 106 steht über eine Stromversorgungsleitung mit einer im Saugkopf 20 angeordneten elektronischen Steuereinrichtung elektrisch in Verbindung. Von der Steuereinrichtung wird der Elektromagnet 106 während des normalen Saugbetriebs des Sauggeräts 10 mit Versorgungsstrom beaufschlagt. Aufgrund des sich ausbildenden Magnetfelds wird der Ventilkörper 100 zuverlässig in seiner Schließstellung gehalten. Die Haltekraft des Elektromagneten 106 wird von der Federkraft der Schließfeder unterstützt.

Wird die Stromversorgung des Elektromagneten 106 unterbrochen, wird entfällt die auf den Ventilkörper 100 einwirkende magnetische Haltekraft und der Ventilkörper 100 wird aufgrund der auf ihn einwirkenden Druckdifferenz, die sich aus dem Außendruck der im Bereich der Ventilhalterung 98 vorliegenden Fremdluft und dem Innendruck innerhalb des Kanals 40 ergibt, entgegen der Wirkung der Schließfeder vom Ventilsitz abgehoben. Fremdluft kann dann schlagartig (impulsartig) durch die Durchgangsöffnungen der Ventilhalterung 98 hindurch in den Kanal 40 einströmen. Dadurch erfolgt eine schlagartige (impulsartige) Beaufschlagung einer Reinseite der Filtereinrichtung 30 mit Fremdluft. Dies führt zu einer mechanischen Erschütterung der Filtereinrichtung 30 und dabei zum Aufblähen der Filtertaschen 38. Die Filtereinrichtung 30 wird in Gegenstromrichtung zu der Saugstromrichtung des Saugstroms 32 bei einem normalen Saugbetrieb von Fremdluft durchströmt. Dies hat eine wirkungsvolle Abreinigung der Filtereinrichtung 30 mit dem Filtertaschen 38 zur Folge.

Bezüglich der Ausgestaltung der Fremdluftventileinrichtung und weiterer Details zu ihrer Funktionsweise wird auf die WO 2012/107103 A1 verwiesen.

In dem Saugkopf 20 ist oberhalb des Filterhalters 28 im Bereich des Fremdluftventils 96 ein Fremdluftpfad 108 gebildet. Über diesen Fremdluftpfad 108 lässt sich Fremdluft in die Filtereinrichtung 30 einkoppeln. Der Fremdluftpfad 108 steht in direkter fluidwirksamer Verbindung mit den Öffnungen 76 der Stutzen 46, sodass sich über den Fremdluftpfad 108 Fremdluft in die jeweiligen Kanäle 40 der Filtertaschen 38 einbringen lässt.

Die automatische Filterabreinigung durch die Filterabreinigungseinrichtung 88 kann dabei beispielsweise während des Ausschaltens des Sauggeräts 10 erfolgen. Es wird dadurch die Strombeaufschlagung des Elektromagneten 106 aufgehoben, sodass das Fremdluftventil 96 von seiner geschlossenen Ventilstellung in seine geöffnete Ventilstellung mit der entsprechenden Fremdluftbeaufschlagung übergehen kann.

Beispielsweise kann auch ein entsprechender Abreinigungsvorgang bei der Inbetriebnahme des Sauggeräts 10 erfolgen.

Beispielsweise ist es alternativ oder zusätzlich auch möglich, dass eine bedarfsgerechte Filterabreinigung erfolgt, bei der an der Filtereinrichtung 30 der Zusetzungsgrad mit Schmutzpartikeln direkt oder indirekt (über eine Sensoreinrichtung) ermittelt wird und entsprechend bei Bedarf dann ein Filterabreinigungsvorgang eingeleitet wird.

Erfindungsgemäß wird eine automatische Filterabreinigungseinrichtung 88, welche automatisiert eine Filterabreinigung der Filtereinrichtung 30 durchführt, mit einer Filtertaschen-Filtereinrichtung 42 kombiniert.

Es hat sich gezeigt, dass sich über eine Filtertaschen-Filtereinrichtung 42 (Kanalfiltereinrichtung) und insbesondere eine Kerzenfiltereinrichtung eine effektive Filterwirkung für insbesondere Holzstäube erreichen lässt. Durch die automatische Filterabreinigungseinrichtung 88 lässt sich ein unterbrechungsfreier Saugbetrieb mit eben automatischer Filterabreinigung erreichen.

Es ergibt sich so ein effektiver Saugbetrieb für einen Bediener, welcher das Sauggerät 10 effektiv insbesondere zur Absaugung von Holzstäuben benutzen kann, ohne dass ein manueller Eingriff für eine Filterabreinigung erforderlich ist.

Das erfindungsgemäße Sauggerät 10 funktioniert wie folgt:
In einem normalen Saugbetrieb erzeugt die Sauggebläseeinrichtung 22 den Saugstrom 32. Dieser beaufschlagt den Sauggutaufnahmeraum 14 und über den Anschluss 16 einen Saugschlauch 18. Es lässt sich dadurch Sauggut einsaugen.

An der Filtertaschen-Filtereinrichtung 42 erfolgt eine Filterung. Aus einem schmutzbeladenen Saugstrom 32 wird an der Filtertaschen-Filtereinrichtung 42 ein gereinigter Saugstrom erzeugt, welcher dann durch die entsprechenden Kanäle 40 der Filtertaschen 38 in den oder die Kanäle 36 an dem Saugkopf 20 strömt.

Die Streckeinrichtung 64, welche den jeweiligen Filtertaschen 38 zugeordnet ist, sorgt dafür, dass die Filtertaschen 38 gestreckt mit ausreichender Steifigkeit hängend in den Aufnahmeraum 34 ragen.

Die automatische Filterabreinigungseinrichtung 88 sorgt nach entsprechenden Vorgaben, welche insbesondere durch den Bedarf vorgegeben sind, bzw. beim Ausschalten bzw. beim Einschalten für eine effektive Filterabreinigung.

Es lässt sich so ein unterbrechungsfreier Saugbetrieb erreichen. Insbesondere lassen sich dadurch auch Holzstäube absaugen.

Die beschriebene Filtertaschen-Filtereinrichtung 42 ist ein Kanalfilter bzw. Kerzenfilter mit einer Mehrzahl von Filtertaschen 38, welche über die Streckeinrichtung 64 der entsprechenden Steifigkeit (Formstabilität) versehen werden, um einen Saugbetrieb unter Saugstrombeaufschlagung zu ermöglichen.

Es ist grundsätzlich auch möglich, dass die Filtertaschen 38 aus einem entsprechenden steifen Material hergestellt sind, sodass keine Streckeinrichtung 64 notwendig ist.

Es sind unterschiedliche Formen für die Filtertaschen 38 und insbesondere den Innenraum 75 möglich.

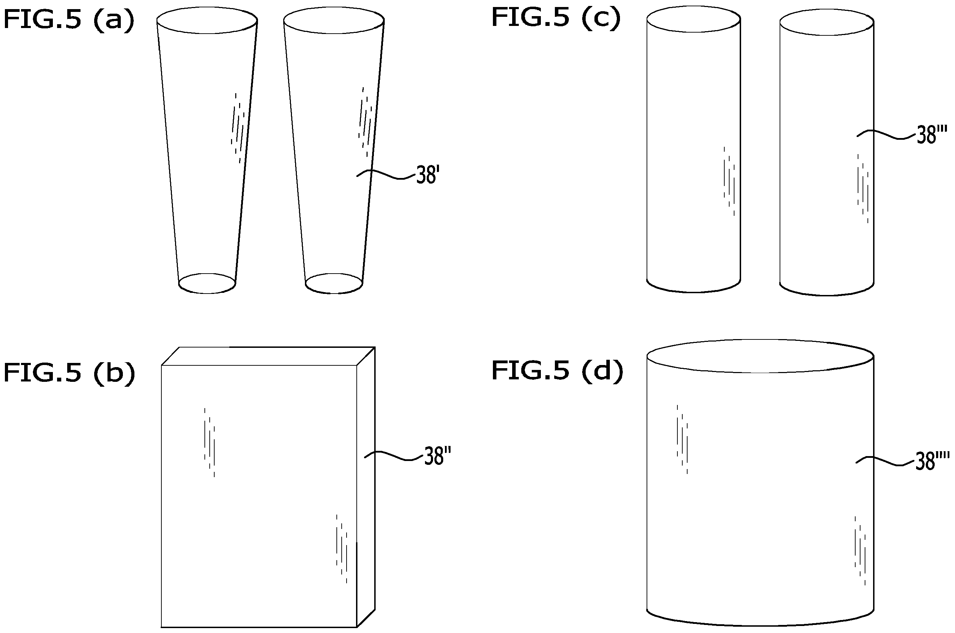

In Figur 5(a) ist ein Beispiel einer (Hohl-)Kegelabschnittform für gestreckte Filtertaschen 38' gezeigt. Diese Streckung kann, wie erwähnt, durch eine entsprechende Streckeinrichtung 64 bewirkt werden, oder durch eine entsprechende Eigensteifigkeit des Materials der Filtertasche 38'.

In Figur 5(b) ist als weiteres Ausführungsbeispiel eine (hohl-)quaderförmige Gestalt für einen Innenraum 75 bzw. für eine entsprechende Filtertasche 38" gezeigt.

In Figur 5(c) sind als weiteres Ausführungsbeispiel Filtertaschen 38‴ gezeigt, welche zylindrisch sind und entsprechend ist der dortige Innenraum 75 (hohl-)zylindrisch.

Bei einem weiteren Ausführungsbeispiel einer Filtertasche 38"", welche in Figur 5(d) gezeigt ist, weist diese einen ovalen Querschnitt auf.

Grundsätzlich kann die Filtereinrichtung 30 genau eine Filtertasche, wie beispielsweise die Filtertasche 38" oder 38ʺʺ aufweisen, oder es können eine Mehrzahl von Filtertaschen 38 bzw. 38' bzw. 38‴ vorgesehen sein, insbesondere angepasst an die entsprechende Anwendung.

Bei einem bevorzugten Ausführungsbeispiel weist die entsprechende Filtertaschen-Filtereinrichtung 42 eine Mehrzahl von Filtertaschen 38 auf.

Wie oben erwähnt, sind diese insbesondere in Reihen 80 und Spalten 82 angeordnet.

Es ist beispielsweise aber auch möglich, dass die Filtertaschen 38 einer Filtertaschen-Filtereinrichtung auf konzentrischen Kreisen verteilt angeordnet sind.

### Bezugszeichenliste

- 10: Sauggerät
- 12: Sauggutbehälter
- 14: Sauggutaufnahmeraum
- 16: Anschluss
- 18: Saugschlauch
- 20: Saugkopf
- 22: Sauggebläseeinrichtung
- 24: Gebläse
- 26: Motor
- 28: Filterhalter
- 29: Öffnung
- 30: Filtereinrichtung
- 32: Saugstrom
- 34: Aufnahmeraum
- 36: Kanal
- 38: Filtertasche
- 38': Filtertasche
- 38": Filtertasche
- 38‴: Filtertasche
- 38ʺʺ: Filtertasche
- 40: Kanal
- 42: Filtertaschen-Filtereinrichtung
- 44: Halterahmen
- 46: Stutzen
- 48: Stutzenanordnung
- 50: Boden
- 52: Öffnung
- 54: Rohrbereich
- 56: Flansch
- 58: Bereich
- 60: Rückseite
- 62: Offenes Ende
- 64: Streckeinrichtung
- 66: Federeinrichtung
- 68: Spiralfeder
- 69: Kraftrichtung
- 70: Boden
- 72: Außenseite
- 74: Innenseite
- 75: Innenraum
- 76: Öffnung
- 77: Längserstreckungsrichtung
- 78: Zentrale Öffnung
- 79: Drehachse
- 80: Reihe
- 82: Spalte
- 84: Filtertaschenanordnung
- 86: Steg
- 88: Filterabreinigungseinrichtung
- 90: Dichtung
- 92: Fremdluftventileinrichtung
- 94: Fremdluftstrom
- 96: Fremdluftventil
- 98: Ventilhalterung
- 100: Ventilkörper
- 102: Zwischenelement
- 104: Anschlagfeder
- 106: Elektromagnet
- 108: Fremdluftpfad

## Patentansprüche

1. Sauggerät zum Absaugen von Holzstaub, umfassend eine Sauggebläseeinrichtung (22) zur Erzeugung eines Saugstroms (32), eine Filtereinrichtung (30), welche mit dem Saugstrom (32) durchströmbar ist, wobei die Filtereinrichtung (30) mindestens eine Filtertasche (38) umfasst, welche hängend gehalten ist, **gekennzeichnet durch** eine automatische Filterabreinigungseinrichtung (88), welche mindestens einen der folgenden Betriebsmodi aufweist: eine automatische Abreinigung bei Ausschalten des Sauggeräts, eine automatische Abreinigung bei Einschalten des Sauggeräts, eine bedarfsgerechte Abreinigung.

2. Sauggerät nach Anspruch 1, **dadurch gekennzeichnet, dass** die mindestens eine Filtertasche (38) mit einer Schmutzseite in einem Aufnahmeraum (34) positioniert ist, welcher Teil eines Sauggutaufnahmeraums (14) ist oder direkt fluidwirksam mit dem Sauggutaufnahmeraum (14) verbunden ist.

3. Sauggerät nach Anspruch 1 oder 2, **dadurch gekennzeichnet, dass** mindestens eine Filtertasche (38) mindestens einen Kanal (40) aufweist, welcher fluidwirksam mit der Sauggebläseeinrichtung (22) verbunden ist, insbesondere mit mindestens einem der Folgenden:
- der mindestens eine Kanal (40) ist durch einen Innenraum (75) der mindestens einen Filtertasche (38) gebildet;
- der mindestens eine Kanal (40) ist bei einem Saugbetrieb des Sauggeräts formstabil;
- der mindestens eine Kanal (40) weist eine Längserstreckungsrichtung (77) auf, welche mindestens näherungsweise parallel zu einer Hauptströmungsrichtung eines Saugstroms (32) bei einer Zuströmung zu der Filtereinrichtung (30) ist, und/oder quer zu einer Öffnung (29) eines Filterhalters (28) orientiert ist, in welche die Filtereinrichtung (30) eingesetzt ist, und/oder quer zu einem Halterahmen (44) der Filtereinrichtung (30) orientiert ist, und/oder mindestens näherungsweise parallel zu einer Drehachse (79) der Sauggebläseeinrichtung (22) orientiert ist, und/oder mindestens näherungsweise parallel zu einer Kraftrichtung (69) einer Streckeinrichtung (64) für die mindestens eine Filtertasche (38) orientiert ist;
- der mindestens eine Kanal (40) ist durch eine Reinseite der mindestens einen Filtertasche (38) begrenzt.

4. Sauggerät nach einem der vorangehenden Ansprüche, **dadurch gekennzeichnet, dass** der mindestens einen Filtertasche (38) eine Streckeinrichtung (64) für die Filtertasche (38) zugeordnet ist, und insbesondere **dadurch gekennzeichnet, dass** die Streckeinrichtung (38) eine Federeinrichtung (66) ist oder umfasst und insbesondere mindestens eine Spiralfeder (68) umfasst.

5. Sauggerät nach einem der vorangehenden Ansprüche, **dadurch gekennzeichnet, dass** die mindestens eine Filtertasche (38) an einem Stutzen (46) angeordnet ist und insbesondere auf den Stutzen (46) aufgestülpt ist, insbesondere mit mindestens einem der Folgenden:
- eine Streckeinrichtung (64) stützt sich an dem Stutzen (46) ab;
- der Stutzen (46) weist mindestens eine Öffnung (76) auf, und insbesondere steht die mindestens eine Öffnung (76) in fluidwirksamer Verbindung mit einem Innenraum (75) der mindestens einen Filtertasche (38), und steht in fluidwirksamer Verbindung mit der Sauggebläseeinrichtung (22) und/oder
die mindestens eine Öffnung (76) steht in fluidwirksamer Verbindung mit einem Fremdluftpfad der Filterabreinigungseinrichtung (88).

6. Sauggerät nach einem der vorangehenden Ansprüche, **dadurch gekennzeichnet, dass** eine Außenseite (72) der mindestens einen Filtertasche (38) eine Schmutzseite ist, und eine Innenseite (74) der mindestens einen Filtertasche (38) eine Reinseite ist.

7. Sauggerät nach einem der vorangehenden Ansprüche, **dadurch gekennzeichnet, dass** die mindestens eine Filtertasche (38) als Filterkerze ausgebildet ist.

8. Sauggerät nach einem der vorangehenden Ansprüche, **dadurch gekennzeichnet, dass** die Filtereinrichtung (30) eine Stutzenanordnung (48) mit einer Mehrzahl von Stutzen (46) mit mindestens einer Öffnung (76) aufweist.

9. Sauggerät nach Anspruch 8, **gekennzeichnet durch** mindestens eines der Folgenden:
- die Stutzenanordnung (48) ist zusammenhängend ausgebildet;
- die Filtereinrichtung (30) weist eine Filtertaschenanordnung (84) mit einer Mehrzahl von Filtertaschen (38) auf, wobei eine jeweilige Filtertasche (38) an einem zugeordneten Stutzen (46) positioniert ist, und insbesondere ist die Filtertaschenanordnung (84) zusammenhängend.

10. Sauggerät nach einem der vorangehenden Ansprüche, **dadurch gekennzeichnet, dass** die Filtereinrichtung (30) eine Mehrzahl von beabstandeten Filtertaschen (38) aufweist, welche insbesondere in Reihen (80) und/oder Spalten (82) angeordnet sind.

11. Sauggerät nach einem der vorangehenden Ansprüche, **dadurch gekennzeichnet, dass** die Filtereinrichtung (30) austauschbar an einem Filterhalter (28) sitzt und insbesondere unterschiedlichen Arten von Filtereinrichtungen (30) an dem Filterhalter (28) positionierbar sind.

12. Sauggerät nach einem der vorangehenden Ansprüche, **gekennzeichnet durch** einen Saugkopf (20), an welchem die Sauggebläseeinrichtung (22) angeordnet ist, und durch einen Sauggutbehälter (12), und insbesondere **dadurch gekennzeichnet, dass** ein Filterhalter (28) für die Filtereinrichtung (30) an dem Saugkopf (20) oder an dem Sauggutbehälter (12) angeordnet ist.

13. Sauggerät nach einem der vorangehenden Ansprüche, **dadurch gekennzeichnet, dass** die automatische Filterabreinigungseinrichtung (88) als Fremdluftventileinrichtung (92) ausgebildet ist, bei welcher die Filtereinrichtung (30) über mindestens ein Fremdluftventil (96) mit Fremdluft (94) beaufschlagbar ist, und insbesondere
**dadurch gekennzeichnet, dass** die Filterabreinigungseinrichtung (88) so angeordnet und ausgebildet ist, dass über Fremdluft (94) die mindestens eine Filtertasche (38) aufblähbar ist und insbesondere schlagartig aufblähbar ist.

14. Verwendung eines Sauggeräts gemäß einem der vorangehenden Ansprüche zum Absaugen von Holzstaub.

## Claims

1. Suction appliance for extracting wood dust, comprising a suction blower device (22) for generating a suction flow (32), a filter device (30) that is able to be flowed through by the suction flow (32), wherein the filter device (30) comprises at least one filter bag (38), which is held in a hanging manner, **characterized by** an automatic filter cleaning device (88), which has at least one of the following operating modes: an automatic cleaning when the suction appliance is switched off, an automatic cleaning when the suction appliance is switched on, a needs-based cleaning.

2. Suction appliance in accordance with Claim 1, **characterized in that** the at least one filter bag (38) is positioned with a dirty side in a receiving space (34) that is part of a suctioned material receiving space (14) or is directly fluidically connected to the suctioned material receiving space (14).

3. Suction appliance in accordance with Claim 1 or 2, **characterized in that** at least one filter bag (38) has at least one channel (40), which is fluidically connected to the suction blower device (22), in particular with at least one of the following:
- the at least one channel (40) is formed by an interior space (75) of the at least one filter bag (38);
- the at least one channel (40) is dimensionally stable during a suction operation of the suction appliance;
- the at least one channel (40) has a direction of longitudinal extent (77), which is at least one approximately parallel to a main flow direction of a suction flow (32) when flowing toward the filter device (30), and/or is oriented transversely to an opening (29) of a filter holder (28) into which the filter device (30) is inserted, and/or is oriented transversely to a holder frame (44) of the filter device (30), and/or is oriented at least approximately parallel to a rotational axis (79) of the suction blower device (22), and/or is oriented at least approximately parallel to a force direction (69) of a stretching device (64) for the at least one filter bag (38);
- the at least one channel (40) is delimited by a clean side of the at least one filter bag (38).

4. Suction appliance in accordance with any one of the preceding Claims, **characterized in that** the at least one filter bag (38) has associated therewith a stretching device (64) for the filter bag (38), and in particular
**characterized in that** the stretching device (38) is or comprises a spring device (66) and, in particular, comprises at least one coil spring (68).

5. Suction appliance in accordance with any one of the preceding Claims, **characterized in that** the at least one filter bag (38) is arranged on a connection piece (46) and, in particular, is slipped onto the connection piece (46), in particular with at least one of the following:
- a stretching device (64) is supported on the connection piece (46);
- the connection piece (46) has at least one opening (76), and in particular the at least one opening (76) is in fluidic connection with an interior space (75) of the at least one filter bag (38), and is in fluidic connection with the suction blower device (22), and/or
the at least one opening (76) is in fluidic connection with an external air path of the filter cleaning device (88).

6. Suction appliance in accordance with any one of the preceding Claims, **characterized in that** an outer side (72) of the at least one filter bag (38) is a dirty side, and in inner side (74) of the at least one filter bag (38) is a clean side.

7. Suction appliance in accordance with any one of the preceding Claims, **characterized in that** the at least one filter bag (38) is configured as a filter candle.

8. Suction appliance in accordance with any one of the preceding Claims, **characterized in that** the filter device (30) has a connection piece arrangement (48) with a plurality of connection pieces (46) having at least one opening (76).

9. Suction appliance in accordance with Claim 8, **characterized by** at least one of the following:
- the connection piece arrangement (48) is of contiguous configuration;
- the filter device (30) has a filter bag arrangement (84) with a plurality of filter bags (38), wherein a respective filter bag (38) is positioned on an associated connection piece (46), and in particular the filter bag arrangement (84) is contiguous.

10. Suction appliance in accordance with any one of the preceding Claims, **characterized in that** the filter device (30) has a plurality of filter bags (38) spaced at a distance from one another, which, in particular, are arranged in rows (80) and/or columns (82).

11. Suction appliance in accordance with any one of the preceding Claims, **characterized in that** the filter device (30) is exchangeably seated on a filter holder (28) and, in particular, different types of filter devices (30) are positionable on the filter holder (28).

12. Suction appliance in accordance with any one of the preceding Claims, **characterized by** a suction head (20) on which the suction blower device (22) is arranged, and by a suctioned material container (12), and in particular
**characterized in that** a filter holder (28) for the filter device (30) is arranged on the suction head (20) or on the suctioned material container (12).

13. Suction appliance in accordance with any one of the preceding Claims, **characterized in that** the automatic filter cleaning device (88) is configured as an external air valve device (92) with which the filter device (30) is able to be acted upon with external air (94) by way of at least one external air valve (96), and in particular
**characterized in that** the filter cleaning device (88) is arranged and configured such that the at least one filter bag (38) is able to be inflated and, in particular, is able to be inflated abruptly by way of external air (94).

14. Use of a suction appliance in accordance with any one of the preceding Claims for extracting wood dust.

## Revendications

1. Appareil d'aspiration permettant d'aspirer de la poussière de bois, comprenant un dispositif formant aspirateur (22) permettant de générer un courant d'aspiration (32), un dispositif de filtration (30) pouvant être traversé par le courant d'aspiration (32), dans lequel le dispositif de filtration (30) comprend au moins une poche de filtration (38) qui est retenue en étant suspendue, **caractérisé par** un dispositif de nettoyage de filtre (88) automatique qui présente au moins un des modes de fonctionnement ci-dessous : un nettoyage automatique lors de la mise à l'arrêt de l'appareil d'aspiration, un nettoyage automatique lors de la mise en marche de l'appareil d'aspiration, un nettoyage adapté aux besoins.

2. Appareil d'aspiration selon la revendication 1, **caractérisé en ce qu'**un côté saleté de la au moins une poche de filtration (38) est positionné dans un espace de réception (34) qui fait partie d'un espace de réception de produit d'aspiration (14) ou qui est relié directement de manière fluidique à l'espace de réception de produit d'aspiration (14).

3. Appareil d'aspiration selon la revendication 1 ou 2, **caractérisé en ce qu'**au moins une poche de filtration (38) présente au moins un canal (40) relié de manière fluidique au dispositif formant aspirateur (22), en particulier avec au moins une des caractéristiques ci-dessous :
- le au moins un canal (40) est formé par un espace intérieur (75) de la au moins une poche de filtration (38) ;
- le au moins un canal (40) est dimensionnellement stable lors du fonctionnement d'aspiration de l'appareil d'aspiration ;
- le au moins un canal (40) présente une direction d'extension longitudinale (77) qui est au moins approximativement parallèle à une direction de circulation principale d'un courant d'aspiration (32) lors d'une circulation vers le dispositif de filtration (30) et/ou qui est orientée transversalement par rapport à un orifice (29) appartenant à un support de filtre (28) et au sein duquel le dispositif de filtration (30) est inséré, et/ou qui est orientée transversalement par rapport à un cadre de retenue (44) du dispositif de filtration (30) et/ou qui est orientée de manière au moins approximativement parallèle à un axe de rotation (79) du dispositif formant aspirateur (22) et/ou qui est orientée de manière au moins approximativement parallèle à une direction de force (69) d'un dispositif d'étirage (64) destiné à la au moins une poche de filtration (38) ;
- le au moins un canal (40) est délimité par un côté propreté de la au moins une poche de filtration (38).

4. Appareil d'aspiration selon l'une quelconque des revendications précédentes, **caractérisé en ce qu'**un dispositif d'étirage (64) destiné à la poche de filtration (38) est associé à la au moins une poche de filtration (38), et en particulier
**caractérisé en ce que** le dispositif d'étirage (38) est, ou comprend, un dispositif à ressort (66) et comprend en particulier au moins un ressort en spirale (68).

5. Appareil d'aspiration selon l'une quelconque des revendications précédentes, **caractérisé en ce que** la au moins une poche de filtration (38) est agencée au niveau d'une tubulure (46) et est en particulier enfilée sur la tubulure (46), en particulier avec au moins une des caractéristiques ci-dessous :
- un dispositif d'étirage (64) s'appuie sur la tubulure (46) ;
- la tubulure (46) présente au moins un orifice (76), et le au moins un orifice (76) est en particulier en liaison fluidique avec un espace intérieur (75) de la au moins une poche de filtration (38), et est en liaison fluidique avec le dispositif formant aspirateur (22) et/ou
le au moins un orifice (76) est en liaison fluidique avec un trajet d'air extérieur du dispositif de nettoyage de filtre (88).

6. Appareil d'aspiration selon l'une quelconque des revendications précédentes, **caractérisé en ce qu'**un côté extérieur (72) de la au moins une poche de filtration (38) est un côté saleté, et un côté intérieur (74) de la au moins une poche de filtration (38) est un côté propreté.

7. Dispositif d'aspiration selon l'une quelconque des revendications précédentes, **caractérisé en ce que** la au moins une poche de filtration (38) est réalisée sous forme de bougie filtrante.

8. Appareil d'aspiration selon l'une quelconque des revendications précédentes, **caractérisé en ce que** le dispositif de filtration (30) présente un agencement de tubulures (48) comprenant une pluralité de tubulures (46) munies d'au moins un orifice (76).

9. Dispositif d'aspiration selon la revendication 8, **caractérisé par** au moins une des caractéristiques ci-dessous :
- l'agencement de tubulures (48) est réalisé de manière connexe ;
- le dispositif de filtration (30) présente un agencement de poches de filtration (84) comprenant une pluralité de poches de filtration (38), dans lequel une poche de filtration (38) respective est positionnée au niveau d'une tubulure (46) associée, et l'agencement de poches de filtration (84) est en particulier connexe.

10. Appareil d'aspiration selon l'une quelconque des revendications précédentes, **caractérisé en ce que** le dispositif de filtration (30) présente une pluralité de poches de filtration (38) espacées qui sont agencées en particulier en rangées (80) et/ou en colonnes (82).

11. Appareil d'aspiration selon l'une quelconque des revendications précédentes, **caractérisé en ce que** le dispositif de filtration (30) est monté de manière interchangeable sur un porte-filtre (28) et différents types de dispositifs de filtration (30) peuvent en particulier être positionnés sur le porte-filtre (28).

12. Appareil d'aspiration selon l'une quelconque des revendications précédentes, **caractérisé par** une tête d'aspiration (20) au niveau de laquelle est agencé le dispositif formant aspirateur (22) et par un réservoir de produit d'aspiration (12), et en particulier
**caractérisé en ce qu'**un porte-filtre (28) destiné au dispositif de filtration (30) est agencé au niveau de la tête d'aspiration (20) ou au niveau du réservoir de produit d'aspiration (12).

13. Appareil d'aspiration selon l'une quelconque des revendications précédentes, **caractérisé en ce que** le dispositif de nettoyage de filtre (88) automatique est réalisé sous la forme d'un dispositif de soupape à air extérieur (92) avec lequel le dispositif de filtration (30) peut être alimenté en air extérieur (94) par l'intermédiaire d'au moins une soupape d'air extérieur (96), et en particulier
**caractérisé en ce que** le dispositif de nettoyage de filtre (88) est agencé et réalisé de sorte que la au moins une poche de filtration (38) peut être gonflée par de l'air extérieur (94) et peut en particulier être gonflée brusquement.

14. Utilisation d'un appareil d'aspiration selon l'une quelconque des revendications précédentes pour aspirer de la poussière de bois.
